# EUROPEAN PATENT SPECIFICATION

(11) **EP 2 405 528 B1**
(45) Date of publication and mention of the grant of the patent: **08.11.2017**
(21) Application number: 11153473.1
(22) Date of filing: 07.02.2011
(51) Int. Cl.: H01M 10/60

(54) **Battery module**
Batteriemodul
Module de batterie

(30) Priority: 06.01.2011 US 929192; 06.07.2010 US 344360 P
(43) Date of publication of application: 11.01.2012
(73) Proprietor: Samsung SDI Co., Ltd., Gyeonggi-do (KR); Robert Bosch GmbH, 70442 Stuttgart (DE)
(72) Inventor: Yoon, Ji-Hyoung, Yongin-si 446-711 (KR)
(74) Representative: Gulde & Partner

(56) References cited:
- EP-A1- 1 970 982
- EP-A1- 2 031 672
- DE-A1-102005 031 504
- DE-A1-102008 054 947
- US-A- 5 756 227
- US-A1- 2001 031 392
- US-A1- 2006 110 656
- US-A1- 2009 169 978

## Description

### BACKGROUND OF THE INVENTION

### (a) Field of the Invention

The present invention relates to a battery module, and more particularly, to a battery module having an improved temperature adjustment function.

### (b) Description of the Related Art

A rechargeable battery is a battery that is chargeable and dischargeable unlike a primary battery that is not chargeable. Low-capacity rechargeable batteries are used for small-sized portable electronic devices such as a portable phone, a notebook computer, and a camcorder and high-capacity batteries are widely used as power sources for driving motors of hybrid cars and so on. Rechargeable batteries are disclosed in DE 10 2005 031504 A1, DE 10 2008 054947 A1, EP 1 970 982 A1, US 2009/169978 A1, EP 2 031 672 A1, US 5,756,227 A, US 2006/110656 A1 and US 2001/031392 A1.

Recently, high-output rechargeable batteries using high-energy-density non-aqueous electrolytes have been developed and the high-output rechargeable batteries are formed as high-output high-capacity battery modules by connecting a plurality of rechargeable batteries in series or in parallel such that they can be used to drive an apparatus requiring a large amount of power, for example, motors of electrical cars.

Such a battery module is formed of several to several tens of rechargeable batteries and thus heat generated in each rechargeable battery should be easily radiated.

If proper heat dissipation is not ensured, the internal temperature of the rechargeable battery rises, which may reduce the lifetime of the rechargeable battery. Further, if the temperature of the rechargeable battery rises continuously, the rechargeable battery may ignite or explode.

Furthermore, since the ion conductivity is comparatively low at a low temperature, the output performance of a battery module may be degraded.

### SUMMARY OF THE INVENTION

The present invention has been made in an effort to provide a battery module having an improved temperature adjustment function.

Therefore, the invention provides a battery module as set forth in claim 1. Preferred embodiments are subject of the dependent claims.

The present invention provides a battery module including a plurality of rechargeable batteries and heat-conductive sheets that may have heat absorption parts brought into contact with the rechargeable batteries and heat radiation parts bent from the heat absorption parts. Further, the battery module includes heat dispersion members that may be connected to the heat radiation parts, and a heat dissipation member installed to be in contact with the heat dispersion members and having heat dissipation fins.

The heat-conductive sheets are disposed between the rechargeable batteries and may pass through the bottom of a housing holding the rechargeable batteries such that the heat radiation parts are exposed to the external of the housing.

Surfaces of the heat radiation parts on one side may be brought into contact with the housing, and surfaces of the heat radiation parts on the other side may be brought into contact with the heat dispersion members. Also, a coolant may flow inside the heat dispersion members, and the heat dissipation member may include a support plate brought into contact with the heat dispersion members and a plurality of heat dissipation fins protruding from the support plate.

The heat dispersion members are formed to extend in a direction in which the rechargeable batteries are stacked and be disposed at intervals in the width direction of the rechargeable batteries. In an alternative embodiment, which is not part of the invention as claimed, the heat dispersion members may be formed to extend in the width direction of the rechargeable batteries and be disposed at intervals in the direction in which the rechargeable batteries are stacked.

A plurality of heat dispersion members may be installed, and the heat dispersion members may be formed such that an interval between heat dispersion members in the center of the battery module is smaller than an interval between heat dispersion members in the edge of the battery module. The curvatures of heat dispersion members may decrease toward the center of the battery module.

The heat dissipation fins are formed to extend in the width direction of the rechargeable batteries such that an interval between heat dissipation fins in the center of the battery module in the direction in which the rechargeable batteries 110 are stacked may be smaller than an interval between heat dissipation fins in the edges of the battery module.

The heat dispersion members are composed of heat pipes, and a heat generator may be connected to the heat dispersion members.

According to the exemplary embodiment of the present invention, since the heat-conductive sheets disposed between the rechargeable batteries is in contact with the heat dispersion members and the heat dispersion members are in contact with a heat sink, heat generated in the rechargeable batteries can efficiently dissipate. Further, when a heat generator is connected to the heat dispersion members, since the rechargeable batteries can be heated through the heat-conductive sheets in low-temperature environment, charge and discharge efficiency in low-temperature environment is improved.

### BRIEF DESCRIPTION OF THE DRAWINGS

FIG. 1 is a perspective view illustrating a battery module according to a first exemplary embodiment of the present invention;
FIG. 2 is a cross-sectional view taken along a line II-II in FIG. 1;
FIG. 3A is a perspective view illustrating a heat-conductive sheet according to the first exemplary embodiment of the present invention, FIG. 3B is a perspective view illustrating a heat-conductive sheet according to a first modification of the first exemplary embodiment of the present invention, and FIG. 3C is a perspective view illustrating a heat-conductive sheet according to a second modification of the first exemplary embodiment of the present invention;
FIG. 4 is a cross-sectional view according to a second exemplary embodiment of the present invention;
FIG. 5A is a perspective view illustrating a subsidiary heat-conductive sheet according to the second exemplary embodiment of the present invention, FIG 5B is a perspective view illustrating a subsidiary heat-conductive sheet according to a first modification of the second exemplary embodiment of the present invention, and FIG. 5C is a perspective view illustrating a subsidiary heat-conductive sheet according to a second modification of the second exemplary embodiment of the present invention;
FIG. 6 is an exploded perspective view illustrating a battery module according to a third exemplary embodiment of the present invention;
FIG. 7 is a cross-sectional view taken along a line VII-VII in a state in which the members shown in FIG. 6 are combined;
FIG. 8 is an exploded perspective view illustrating a battery module according to a fourth exemplary embodiment of the present invention;
FIG. 9 is an exploded perspective view illustrating a battery module according to a fifth exemplary embodiment of the present invention; and
FIG. 10 is an exploded perspective view illustrating a battery module according to a sixth exemplary embodiment of the present invention;
FIG. 11 is a perspective view illustrating a heat dissipation member according to a seventh exemplary embodiment of the present invention.

### DETAILED DESCRIPTION OF THE EMBODIMENTS

Hereinafter, the present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

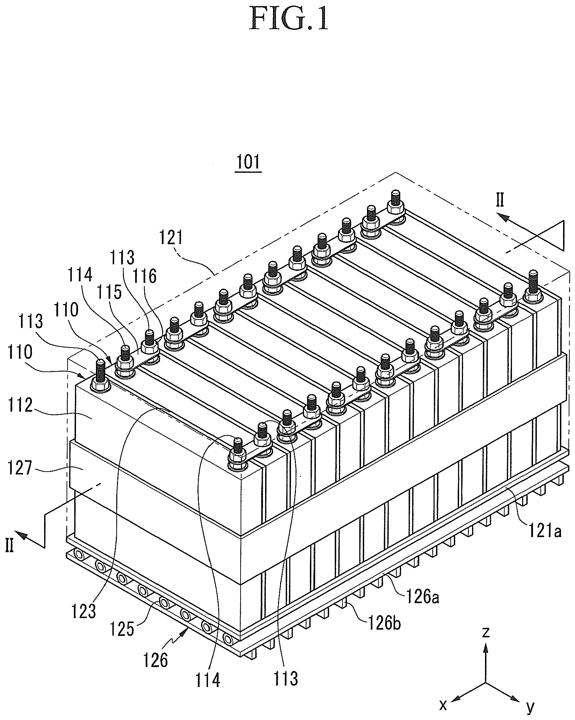

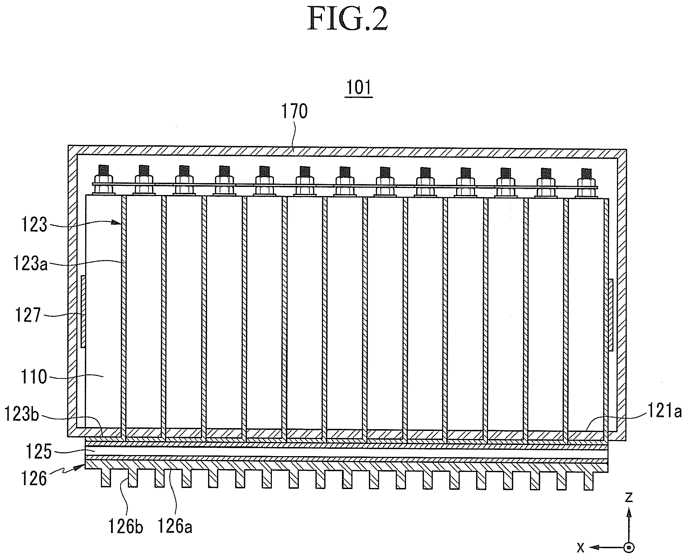

FIG. 1 is a perspective view illustrating a battery module according to a first exemplary embodiment of the present invention, and FIG. 2 is a cross-sectional view taken along a line II-II in FIG. 1.

Referring to FIGS. 1 and 2, a battery module 101 according to the first exemplary embodiment of the present invention includes a plurality of rechargeable batteries 110, a housing 121 holding the rechargeable batteries 110, heat-conductive sheets 123 being in close contact with the rechargeable batteries, heat dispersion members 125 being in contact with the heat-conductive sheets 123, and a heat dissipation member 126 being in contact with the heat dispersion members 125.

A case in which the rechargeable battery 110 according to the first exemplary embodiment is a lithium ion rechargeable battery and has a square shape will be described as an example. However, the present invention is not limited thereto but is applicable to various types of batteries such as a lithium polymer battery or a cylindrical battery.

The rechargeable batteries 110 are stacked side by side and the positive terminals 113 and the negative terminals 114 of the neighboring rechargeable batteries 110 are alternately disposed. An positive terminal 113 of a rechargeable battery 110 on one side and a negative terminal 114 of the next rechargeable battery 110 are electrically connected by a bus bar 115. Accordingly, the rechargeable batteries 110 are connected in series by bus bars 115 and the bus bars 115 are rigidly fixed to the terminals 113 and 114 by nuts 116.

The rechargeable batteries 110 are fixed as one body by a band 127, and the band 127 surrounds the stacked rechargeable batteries 110 and is made of an elastic material. However, the present invention is not limited thereto. The rechargeable batteries may be fixed by a tie bar fixing an end plate and another end plate.

The heat-conductive sheets 123 are inserted between the rechargeable batteries 110 and are brought into close contact with entire wide surfaces of the rechargeable batteries 110. The heat-conductive sheets 123 may be formed of a metal such as copper, aluminum, or anodized aluminum. Also, the heat-conductive sheets 123 may be formed of a heat-conductive silicon sheet, and may be formed of, for example, a graphite heat dissipation sheet that uses carbon fibers and carbon nano-tubes as a material. The graphite heat dissipation sheet is superior in the heat conductivity and may have an electrical insulation property, which make it possible to ensure heat conductivity and electrical safety.

The thickness of the heat-conductive sheets 123 may be 0.1 mm to 1 mm. Therefore, heat generated in the rechargeable batteries 110 is effectively radiated without increasing the volume of the battery module 101. In the related art, a method of forming an air flow path between rechargeable batteries by using partitions is generally applied. If the heat-conductive sheets 123 are applied, it is possible to remarkably reduce the volume as compared to a structure having partitions. The volume of the battery module 101 greatly influences the performance and structure of an apparatus adapting the battery module 101. For this reason, it is very important to reduce the volume of the battery module 101.

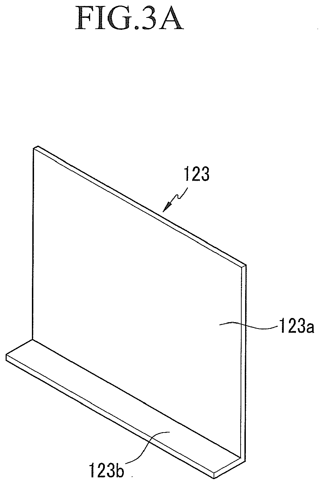

The housing 121 is formed in a hexahedral shape having internal space, and the rechargeable batteries 110 are inserted into the housing 121. As shown in FIGS. 2 and 3A, since the heat-conductive sheets 123 are installed through the bottom 121a of the housing 121, each of the heat-conductive sheets 123 includes a heat absorption part 123a brought into contact with corresponding rechargeable batteries 110 and a heat radiation part 123b passing through the bottom 121a and bent. The heat absorption part 123a is installed to entirely cover the front surface of a corresponding rechargeable battery 110 and the heat radiation part 123b is bent and brought into close contact with the external of the bottom 121a of the housing.

The bottom 121a of the housing 121 may be formed of a material that is superior in heat conductivity, such as aluminum, copper or stainless steel. Also, the bottom 121a of the housing 121 may be formed in a structure in which glass fibers are inserted into a synthetic resin material such as PP (polypropylene), PBT (poly butylene terephthalate), PET (poly ethylene terephthalate), and PFA (perfluoro alkoxy alkane).

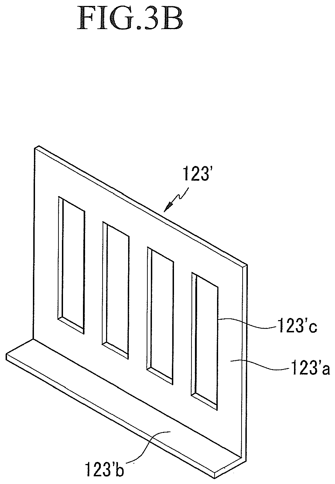

As shown in FIG. 3B, a heat-conductive sheet 123' has a heat absorption part 123'a and a heat radiation part 123'b bent from the heat absorption part 123'a and may be formed in a structure in which holes 123'c are formed in the heat absorption part 123'a. The holes 123'c are formed to be long in the height direction of the rechargeable batters 110. Accordingly, heat transmitted to the heat absorption part 123'a is conducted in the height direction of the heat-conductive sheet 123', thereby quickly transmitting the heat to the heat radiation part 123'b.

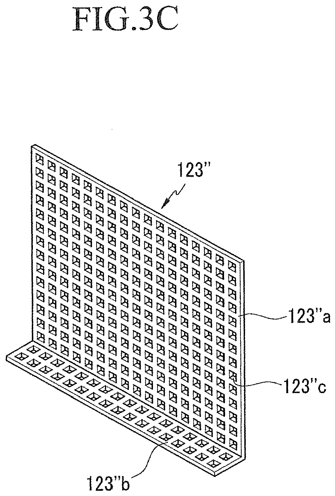

Alternatively, as shown in FIG. 3C, a heat-conductive sheet 123" has a heat absorption part 123"a and a heat radiation part 123"b bent from the heat absorption part 123"a and may be formed in a mesh structure in which holes 123"c are formed in the heat-conductive sheet 123". If the heat-conductive sheet 123" is formed in the mesh structure, the heat-conductive sheet 123" makes it possible to minimize an increase in the volume of the battery module.

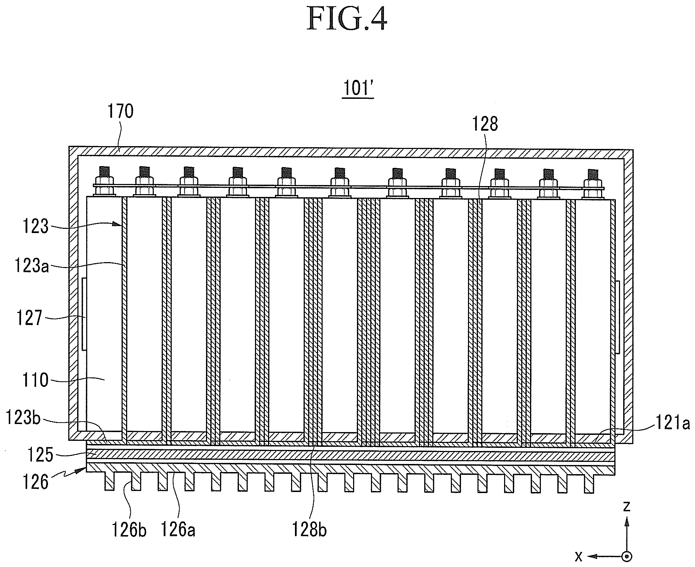

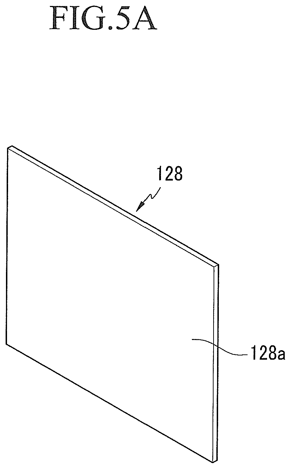

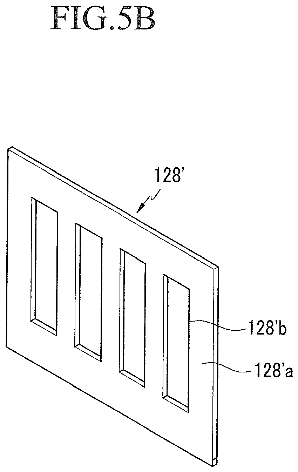

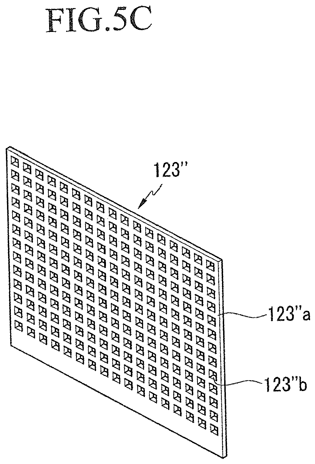

FIG. 4 is a cross-sectional view according to a second exemplary embodiment of the present invention, FIG. 5A is a perspective view illustrating a subsidiary heat-conductive sheet according to the second exemplary embodiment of the present invention, FIG 5B is a perspective view illustrating a subsidiary heat-conductive sheet according to a first modification of the second exemplary embodiment of the present invention, and FIG. 5C is a perspective view illustrating a subsidiary heat-conductive sheet according to a second modification of the second exemplary embodiment of the present invention;

A battery module 101' according to the present exemplary embodiment has a structure similar to the above-mentioned first exemplary embodiment of FIG. 2 except for structures of the subsidiary heat conductive sheet 128 and thus a repeated description of identical structures is omitted.

Referring to FIG. 4, one or more subsidiary heat-conductive sheet 128 may be installed between the heat-conductive sheet 123 and the rechargeable battery 110.

That is, four subsidiary heat-conductive sheets 128 may be installed in the center of the battery module 101' where a large amount of heat is generated, and one subsidiary heat-conductive sheet 128 may be installed in an edge portion of the battery module 101' where a relatively small amount of heat is generated. And, two or three subsidiary heat-conductive sheets 128 may be installed at a portion between the center and the edge.

If the subsidiary heat-conductive sheets 128 are installed as in the above-mentioned structure, heat of a portion where a large amount of heat is generated can be quickly conducted, which makes it possible to uniformly maintain the temperatures of the rechargeable batteries 110'.

As shown in FIG. 4 and 5A, the subsidiary heat-conductive sheets 128 are installed through the bottom 121a of the housing 121, and each of the subsidiary heat-conductive sheets 128 has a subsidiary heat absorption part 128a contacting with the heat-conductive sheet 123 and passes through the bottom 121a.

More particularly, the subsidiary heat absorption part 128a is brought into contact with the rear surface of corresponding heat-absorption part 123a and the front surface of corresponding rechargeable battery 110, and a lower part of the subsidiary heat absorption part 128a is brought into contact with corresponding heat radiation part 123b of the heat-conductive sheet 123.

As shown in FIG. 5B, a subsidiary heat-conductive sheet 128' has a subsidiary heat absorption part 128'a, and may be formed in a structure in which holes 128'b are formed in the subsidiary heat absorption part 128'a. Each of the holes 128'b may be formed to be long in the height direction of the rechargeable battery 110.

Furthermore, as shown in FIG. 5C, a subsidiary heat-conductive sheet 128" has a subsidiary heat absorption part 128"a and may be formed in a mesh structure in which holes 128"b are formed in the subsidiary heat-conductive sheet 128"

Meanwhile, referring to FIG. 2 again, the heat dispersion members 125 providing a coolant path are disposed below the heat radiation parts 123b to be in close contact with the heat radiation parts 123b. The heat dispersion members 125 are composed of heat pipes, are extend in a direction (an x-axis direction of FIG. 1) in which the rechargeable batteries 110 are stacked, and are arranged at intervals in a width direction of the rechargeable batteries 110 (a y-axis direction of FIG. 1).

However, the present invention is not limited thereto. The heat dispersion members 125 may be formed in various structures, for example, a hollow plate structure, as long as they can form a coolant path. A fluid having a large specific heat flows inside the heat dispersion members 125 and the fluid may be formed of water, alcohol, CFC (chlorofluorocarbon), etc.

The heat dissipation member 126 having heat dissipation fins 126b is provided below the heat dispersion members 125. The heat dissipation member 126 includes a support plate 126a brought into contact with the heat dispersion members 125 and the heat dissipation fins 126b protruding from the support plate 126a. The support plate 126a is disposed to be in close contact with the heat dispersion members 125 and may be attached to the heat dispersion members 125 with a heat-conductive adhesive. The heat-conductive adhesive may be formed of thermal grease, a thermal compound, etc.

The heat dissipation fins 126b are formed to extend in the width direction of the rechargeable batteries 110 (the y-axis direction of FIG. 1) and are arranged at intervals in the direction (the x-axis direction of FIG. 1) in which the rechargeable batteries 110 are stacked.

If the heat-conductive sheets 123 disposed between the rechargeable batteries 110 are in contact with the heat dispersion members 125 as in the present exemplary embodiment, heat generated in the rechargeable batteries 110 can be easily transmitted to the heat dispersion members 125. Further; the heat dispersion members 125 and the heat dissipation member 126 are connected such that heat also dissipates through the heat dissipation member 126, resulting in quicker heat dissipation. Particularly, the heat dispersion members 125 are formed of heat pipes. The heat pipes are superconductors, disperse heat transmitted from the heat-conductive sheets 123, and transmit the heat to the heat dissipation member 126 quickly. Therefore, heat dissipation efficiency is further improved. If the heat pipes are formed to extend in the direction in which the rechargeable batteries 110 are stacked as in the present exemplary embodiment, heat generated in the central potion of the battery module 101 is conducted to the whole heat pipes and the heat pipes are cooled by the heat dissipation member 126. Therefore, the rechargeable batteries 110 can be uniformly cooled.

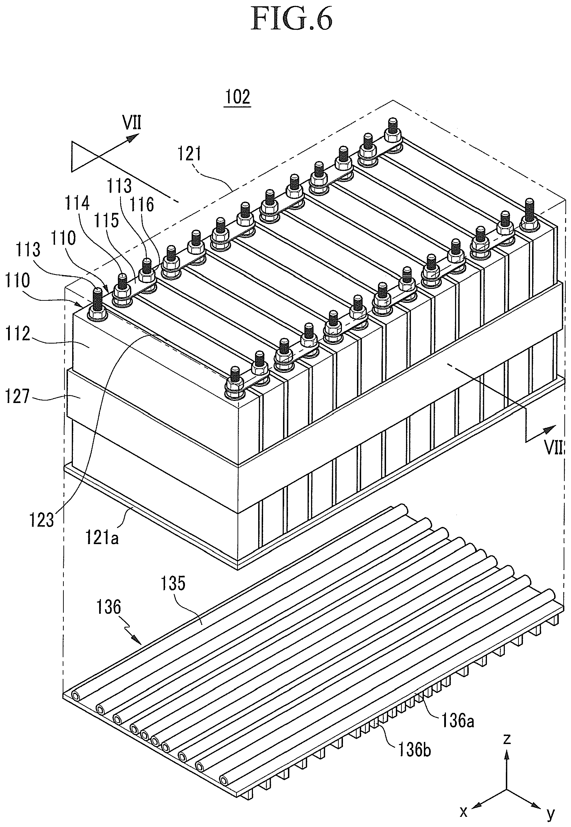

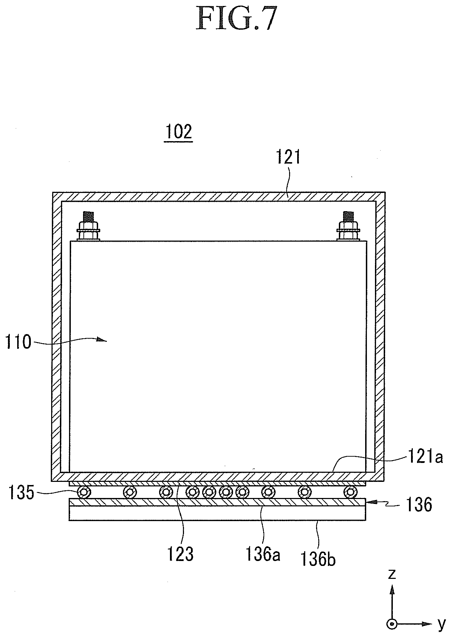

FIG. 6 is an exploded perspective view illustrating a battery module according to a third exemplary embodiment of the present invention, and FIG. 7 is a cross-sectional view taken along a line VII-VII in a state in which the members shown in FIG. 6 are combined.

Referring to FIGS. 6 and 7, a battery module 102 according to the present exemplary embodiment has the same structure as the above-mentioned first exemplary embodiment except for structures of heat dispersion members 135 and a heat dissipation member 136, and thus a repeated description of identical structures is omitted.

The heat dispersion members 135 are composed of heat pipes brought into thermal contact with the heat-conductive sheets 123 and are formed to extend in the direction (an x-axis direction of FIG. 6) in which the rechargeable batteries 110 are stacked. Further, the plurality of heat dispersion members 135 are disposed at intervals in the width direction of the rechargeable batteries 110 such that an interval between heat dispersion members 135 in the central portion of the rechargeable batteries 110 in the width direction of the rechargeable batteries 110 (a y-axis direction of FIG. 6) is smaller than an interval between heat dispersion members 135 in an edge portion. That is, more heat dispersion members 135 are installed in the central portion of the rechargeable batteries 110 and thus an interval between the heat dispersion members 135 becomes smaller. Accordingly, a relatively large amount of heat generated in the central portion can be quickly transmitted to the heat dissipation member 136 through the heat dispersion members 135. The heat dispersion members 135 can quickly transmit heat. However, since the heat dispersion members 135 extend in the direction in which the rechargeable batteries 110 are stacked, the heat dispersion members 135 have a limit in solving a problem that the temperature of the center of the width direction of the rechargeable batteries 110 is high. However, if more heat dispersion members 135 are installed in the center of the width direction of the rechargeable batteries 110 as in the present exemplary embodiment, heat generated in the center of the width direction of the rechargeable batteries 110 can dissipate quicker.

Meanwhile, the heat dissipation member 136 is composed of a heat sink that includes a support plate 136a and heat dissipation fins 136b protruding from the support plate 136a, and the heat dissipation fins 136b are formed to extend in the width direction of the rechargeable batteries 110 and are arranged at intervals in the direction in which the rechargeable batteries 110 are stacked. The heat dissipation fins 136b are disposed such that an interval between heat dissipation fins 136b in the central portion of the battery module 102 in the direction in which the rechargeable batteries 110 are stacked is smaller than an interval between heat dissipation fins 136b in an edge portion. That is, more heat dispersion fins 136b are installed in the central portion of the battery module 102 and thus an interval between the heat dissipation fins 136b become smaller. Accordingly, heat generated in rechargeable batteries 110 positioned in the central portion dissipates more quickly even when the temperatures of the rechargeable batteries 110 positioned in the central portion of the battery module 102 are relatively high, thereby capable of uniformly cooling the rechargeable batteries 110. Even when the heat pipe quickly transmits heat, heat of rechargeable batteries 110 positioned in the central portion of the battery module 102 may be transmitted to rechargeable batteries 110 positioned in an edge. However, according to the present exemplary embodiment, since more heat dissipation fins 136b are installed the central portion of the heat dissipation member 136 such that a larger amount of heat dissipates in the center of the heat dissipation member 136, heat generated in the center of the battery module 102 can dissipate quickly.

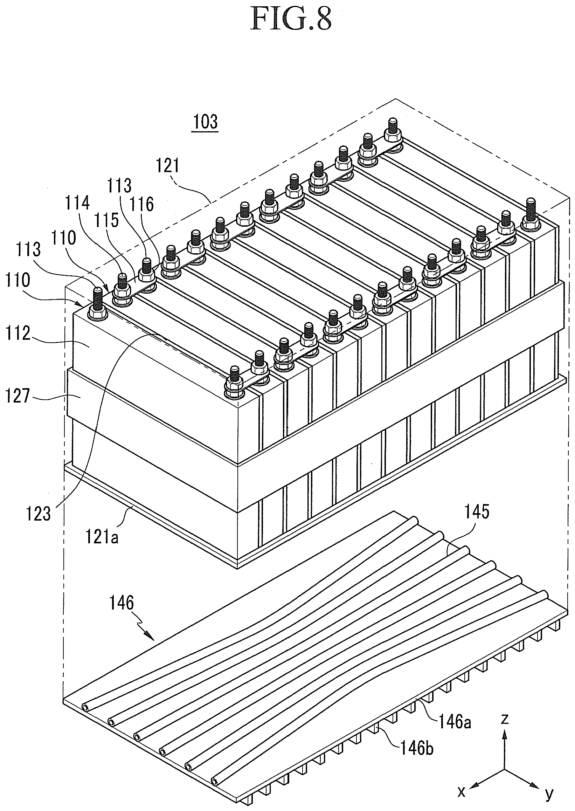

FIG. 8 is an exploded perspective view illustrating a battery module according to a fourth exemplary embodiment of the present invention.

Referring to FIG. 8, a battery module 103 according to the present exemplary embodiment has the same structure as the above-mentioned first exemplary embodiment except for structures of heat dispersion members 145, and thus a repeated description of identical structures is omitted.

The heat dispersion members 145 are composed of heat pipes brought into thermal contact with the heat-conductive sheets 123. Also, the plurality of heat dispersion members 145 are disposed at intervals in the width direction of the rechargeable batteries 110 (a y-axis direction in FIG. 8) and are formed to extend in the direction (an x-axis direction in FIG. 8) in which the rechargeable batteries 110 are stacked.

The heat dispersion members 145 are formed in an arc shape having a longitudinal center lying toward the center of the width direction of the rechargeable batteries 110 (the y-axis direction in FIG. 8). Accordingly, an interval between heat dispersion members 145 in an edge in the direction in which the rechargeable batteries 110 are stacked becomes larger than an interval between heat dispersion members 145 in the center portion.

That is, the heat dispersion members 145 are concentrated in the center in the direction in which the rechargeable batteries 110 are stacked and are dispersed in the edge. Accordingly, heat generated in the center of the battery module 103 is dispersed through the heat dispersion members 145 and is transmitted to a heat dissipation member 146. Therefore, it is possible not only to quickly dissipate heat through the heat dissipation member 146 but also to uniformly cool the rechargeable batteries 110.

Meanwhile, the heat dissipation member 146 is composed of a heat sink that includes a support plate 146a and heat dissipation fins 146b protruding from the support plate 146a. The heat dissipation fins 146b are formed to extend in the width direction of the rechargeable batteries 110 and are arranged at intervals in the direction in which the rechargeable batteries 110 are stacked.

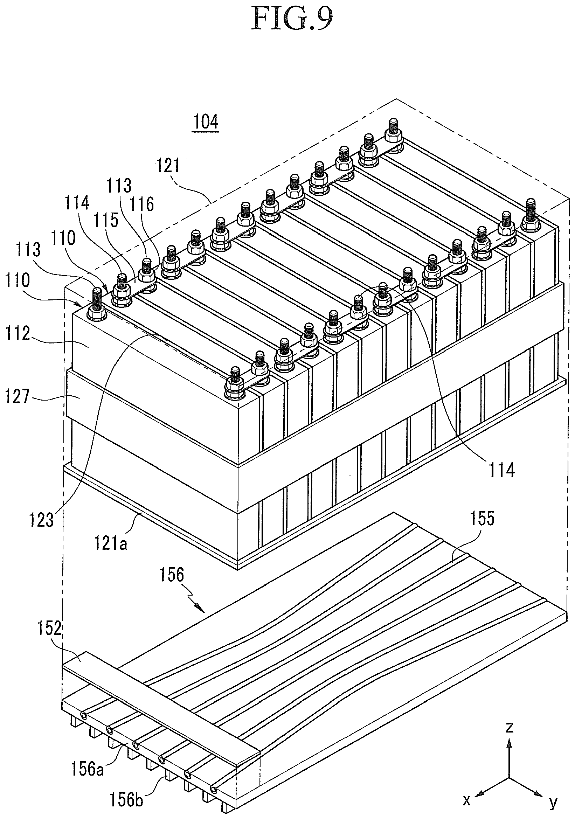

FIG. 9 is an exploded perspective view illustrating a battery module according to a fourth exemplary embodiment of the present invention.

Referring to FIG. 9, a battery module 104 according to the present exemplary embodiment has the same structure as the above-mentioned first exemplary embodiment except for structures of heat dispersion members 155 and a heat dissipation member, and thus a repeated description of identical structures is omitted.

The heat dispersion members 155 are composed of heat pipes brought into thermal contact with the heat-conductive sheets 123. Also, the plurality of heat dispersion members 155 are disposed at intervals in the width direction of the rechargeable batteries 110 (an x-axis direction in FIG. 9) and are formed to extend in the direction (a y-axis direction in FIG. 9) in which the rechargeable batteries 110 are stacked. The heat dispersion members 155 are formed in an arc shape having a longitudinal center lying toward the center of the width direction of the rechargeable batteries 110. Accordingly, an interval between heat dispersion members 155 in an edge in the direction in which the rechargeable batteries 110 are stacked becomes larger than an interval between heat dispersion members 155 in the center portion.

That is, the heat dispersion members 155 are concentrated in the center in the direction in which the rechargeable batteries 110 are stacked and are dispersed in the edge. Accordingly, heat generated in the center of the battery module 104 is dispersed through the heat dispersion members 155 and is transmitted to a heat dissipation member 156. Therefore, it is possible not only to quickly dissipate heat through the heat dissipation member 156 but also to uniformly cool the rechargeable batteries 110.

Meanwhile, the heat dissipation member 156 is composed of a heat sink that includes a support plate 156a and heat dissipation fins 156b protruding from the support plate 156a. The heat dissipation fins 156b are formed to extend in the direction in which the rechargeable batteries 110 are stacked and are arranged at intervals in the width direction of the rechargeable batteries 110.

Also, the heat dispersion members 155 are partially inserted into the support plate 156a and are partially exposed from the top of the support plate 156a.

The exposed portions of the heat dispersion members 155 are brought into contact with the heat-conductive sheets 123 and receive heat from the heat-conductive sheets 123, and the portions inserted into the support plate 156a transmit the heat to a heat dissipation member 156. If the heat dispersion members 155 are inserted into the support plate 156a to be in contact with the support plate 156a as described above, the heat dispersion members 155 can transmit heat to the support plate 156a more quickly.

The battery module 104 according to the present exemplary embodiment further includes a heat generator 152 thermally connected to the heat dispersion members 155. The heat generator 152 is formed to extend in the width direction of the rechargeable batteries 110 and is attached to the individual heat dispersion members 155 disposed at intervals. The heat generator 152 may be composed of any one of various members such as a thermoelectric element, hot wire, etc.

Accordingly, heat generated in the heat generator 152 can be quickly transmitted to the heat-conductive sheets 123 through the heat dispersion members 155, thereby capable of uniformly heating the rechargeable batteries 110 in low-temperature environment.

At a low temperature, ions inside the rechargeable batteries 110 cannot properly move, resulting in low charge and discharge efficiency. Particularly, when the battery module 104 is installed in, for example, a car, or is used as, for example, an external power storage device, at a subzero temperature in winter, charge and discharge efficiency lowers. However, according the present exemplary embodiment, since the rechargeable batteries 110 can be quickly heated through the heat generator 152, the heat dispersion members 155, and the heat-conductive sheets 123, charge and discharge efficiency is improved.

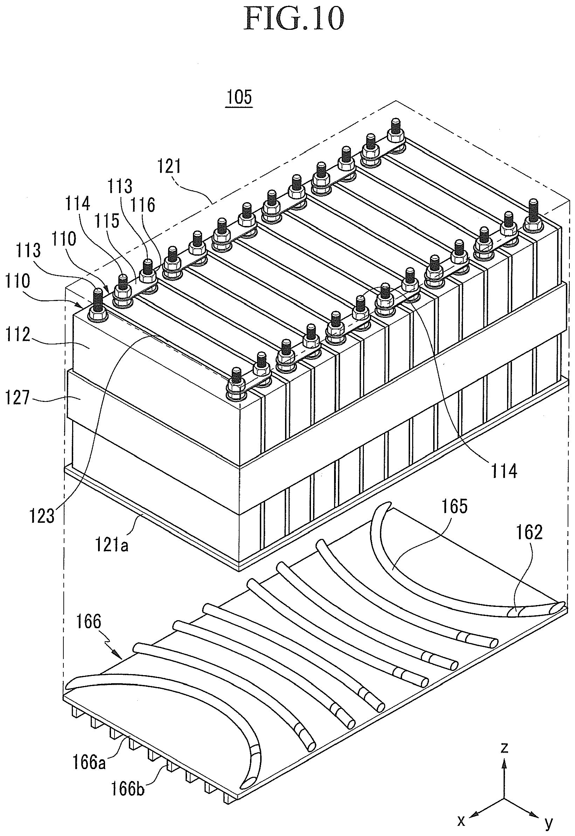

FIG. 10 is an exploded perspective view illustrating a battery module according to an exemplary embodiment that is not part of, but useful for the understanding of the present invention as claimed.

Referring to FIG. 10, a battery module 105 according to the present exemplary embodiment has the same structure as the above-mentioned first exemplary embodiment except for structures of heat dispersion members 165 and a heat dissipation member 166, and thus a repeated description of identical structures is omitted.

The heat dispersion members 165 are composed of heat pipes brought into thermal contact with the heat-conductive sheets 123. Also, the plurality of heat dispersion members 165 are disposed at intervals in the direction (an x-axis direction in FIG. 10) in which the rechargeable batteries 110 are stacked and are formed to extend in the width direction of the rechargeable batteries 110 (a y-axis direction in FIG. 10).

The heat dispersion members 165 are formed in an arc shape having a longitudinal center lying toward the center of the direction in which the rechargeable batteries 110 are stacked, and the curvatures of the heat dispersion members 165 increase toward longitudinal edges of .the battery module 105

Accordingly, an interval between heat dispersion members 165 in an edge in the width direction of the rechargeable batteries 110 becomes larger than an interval between heat dispersion members 165 in the center portion.

That is, in the battery module 105, the heat dispersion members 165 are concentrated in the center in the width direction of the rechargeable batteries 110 and are dispersed in the edges. In this structure, heat generated in the center of the battery module 105 is dispersed through the heat dispersion members 165 and is transmitted to the heat dissipation member 166.

Meanwhile, the heat dissipation member 166 is composed of a heat sink that includes a support plate 166a and heat dissipation fins 166b protruding from the support plate 166a. The heat dissipation fins 166b are formed to extend in the direction in which the rechargeable batteries 110 are stacked and are arranged at intervals in the width direction of the rechargeable batteries 110.

Therefore, it is possible not only to quickly dissipate heat through the heat dissipation member 166 but also to uniformly cool the rechargeable batteries 110.

Further, since a heat generator 162 is attached to the heat dispersion members 165, in low-temperature environment, the heat generator 162 heats the heat dispersion members 165, resulting in improved charge and discharge efficiency. Here, the heat generator 162 may be formed of a thermoelectric element, heat wire, etc.

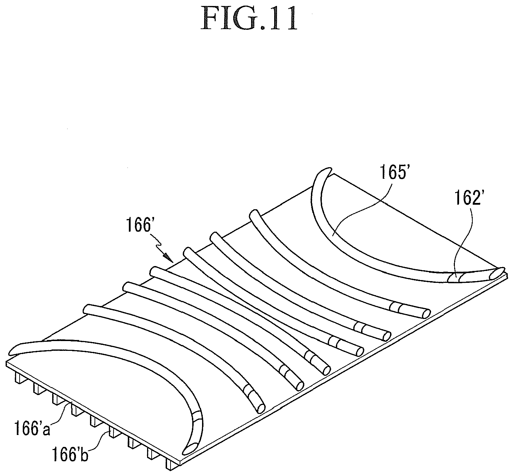

FIG. 11 is a perspective view illustrating a heat dissipation member according to an exemplary embodiment that is not part of, but useful for the understanding of the present invention.

Referring to FIG. 11, a heat dissipation member 166' according to the present exemplary embodiment has the same structure as the above-mentioned sixth exemplary embodiment except for a spacing interval of heat dispersion members 165' adjacent to a center of a heat dissipation member 166'.

That is, as shown in FIG. 10, a spacing interval among the heat dispersion members 165 adjacent to a center of a heat dissipation member 166 is equal in a spacing interval of the heat dispersion members 165 adjacent to outer edges of a heat dissipation member 166.

However, according to the present exemplary embodiment, the spacing interval of the heat dispersion members 165' adjacent to the center of the heat dissipation member 166' may be spaced apart at the spacing interval smaller than the spacing interval of heat dispersion members 165' adjacent to outer edges of the heat dissipation members 166'.

If the spacing interval of heat dispersion members 165' adjacent to the center of the heat dissipation member 166' is formed as mentioned above, heat of a portion adjacent to the center can be quickly dispersed and dissipated, which makes it possible to uniformly maintain the temperatures of the rechargeable batteries 110.

## Claims

1. A battery module (101, 101', 102, 103)
comprising
a plurality of series-connected and stacked rechargeable batteries (110),
a plurality of heat-conductive sheets (123, 123', 123") interposed between and being in thermal contact with the stacked rechargeable batteries (110), heat dispersion members (125, 135, 145)
providing a coolant path and being composed of heat pipes being in thermal contact with the heat-conductive sheets (123, 123', 123"), wherein
the battery module (101, 101', 102, 103) further comprises a heat dissipation member (126, 136, 146) including a support plate (126a, 136a, 146a) being in thermal contact with the heat dispersion member (125, 135, 145) and with heat dissipation fins (126b, 136b, 146b) protruding from the support plate (126a, 136a, 146a) **characterized in that** the heat pipes extend in a direction in which the rechargeable batteries (110) are stacked and are arranged at intervals in a width direction of the rechargeable batteries (110), and **in that**
the heat dissipation fins (126b, 136b, 146b) extend in the width direction of the rechargeable batteries (110), and are arranged at intervals in the direction in which the rechargeable batteries (110) are stacked.

2. The battery module (101, 101', 102, 103) of claim 1, wherein the heat-conductive sheets (123, 123', 123") include heat absorption parts (123a, 123'a, 123"a) interposed between the stacked rechargeable batteries (110) and heat radiation parts (123b, 123'b, 123"b) angled away from the heat absorption parts (123a, 123'a, 123"a) and in contact with the at least one heat dispersion member (125, 135, 145).

3. The battery module (101, 101', 102, 103) of claim 2, wherein the heat absorption parts (123'a) of the heat-conductive sheets (123') comprise holes (123'c) that are formed to be long in a height direction from a connecting edge of the heat absorption parts (123'a) connecting the heat absorption parts (123'a) to the heat radiation parts (123'b) to an opposing edge of the heat-conductive sheets (123') opposite to the connecting edge or wherein the heat-conductive sheets (123") include a mesh structure.

4. The battery module (101') of one of the preceding claims, further including one or more subsidiary heat-conductive sheets (128, 128', 128") interposed between the heat-conductive sheets (123, 123', 123") and the stacked rechargeable batteries (110).

5. The battery module (101') of claim 4, wherein a first number of subsidiary heat-conductive sheets (128, 128', 128") interposed between neighbouring rechargeable batteries (110) in a centre part of the stacked rechargeable batteries (110) is greater than a second number of subsidiary heat-conductive sheets (128, 128', 128") interposed between neighbouring rechargeable batteries (110) in a peripheral part of the stacked rechargeable batteries (110).

6. The battery module (102, 103) of claim 1, wherein a first summed cross-sectional area of heat pipes disposed in a centre region of the heat dissipation member (136, 146, 156, 166, 166') is greater per unit distance than a second summed cross-sectional area of heat pipes disposed in peripheral regions of the heat dissipation member (136, 146, 156, 166, 166'), the peripheral region being located away from the centre region in a direction crossing the heat pipes.

7. The battery module (102, 103) of claim 1 or 6, wherein a first interval between neighbouring heat pipes in a centre region of the heat dissipation member (136, 146) is smaller than a second interval between the neighbouring heat pipes in a peripheral region of the heat dissipation member (136, 146), the peripheral region being located away from the centre region in a direction crossing the heat pipes.

8. The battery module (103) of one of the claims 6 and 7, wherein the heat pipes are arranged such that an interval between a selected pair of neighbouring heat pipes increases from a centre region of the pair of neighbouring heat pipes toward peripheral regions of the pair of neighbouring heat pipes.

9. The battery module (103) of one of the claims 7 or 8, wherein the heat pipes comprise an arc-shaped centre section arranged in a central section of the heat pipes or wherein the heat pipes are formed in an arc-shaped form.

10. The battery module (102) of claim 1, wherein a first interval between neighbouring heat dissipation fins (136b) in a centre region of the heat dissipation member (136) is smaller than a second interval between the neighbouring heat dissipation fins (136b) in a peripheral region of the heat dissipation member (136), the peripheral region being located away from the centre region in a direction crossing the heat dissipation fins (136b).

11. The battery module of one of the preceding claims, wherein the heat dispersion members are partially inserted into a support plate of the heat dissipation member.

## Patentansprüche

1. Ein Batteriemodul (101, 101', 102, 103), aufweisend
eine Vielzahl von in Reihe geschalteten und gestapelten wiederaufladbaren Batterien (110),
eine Vielzahl wärmeleitender Platten (123, 123', 123 "), die zwischen die gestapelten wiederaufladbaren Batterien (110) eingefügt sind und mit diesen in thermischem Kontakt stehen,
Wärmedispersionselemente (125, 135, 145), die einen Kühlmittelweg bereitstellen und aus Wärmeleitungen, die in thermischem Kontakt mit den wärmeleitenden Platten (123, 123', 123") stehen, zusammengesetzt sind, wobei das Batteriemodul (101, 101', 102, 103) ferner ein Wärmeableitungselement (126, 136, 146), das eine Stützplatte (126a, 136a, 146a), die in thermischem Kontakt mit dem Wärmedispersionselement (125, 135, 145) und mit Wärmeableitungslamellen (126b, 136b, 146b), die aus der Stützplatte (126a, 136a, 146a) vorstehen, steht, aufweist,
**dadurch gekennzeichnet, dass**
die Wärmeleitungen sich in eine Richtung, in der die wiederaufladbaren Batterien (110) gestapelt sind, erstrecken und in Abständen in einer Breitenrichtung der wiederaufladbaren Batterien (110) angeordnet sind, und dadurch, dass
die Wärmeableitungslamellen (126b, 136b, 146b) sich in die Breitenrichtung der wiederaufladbaren Batterien (110) erstrecken und in Abständen in der Richtung, in der die wiederaufladbaren Batterien (110) gestapelt sind, angeordnet sind.

2. Das Batteriemodul (101, 101', 102, 103) nach Anspruch 1, wobei die wärmeleitenden Platten (123, 123', 123") Wärmeabsorptionsteile (123a, 123'a, 123"a), die zwischen die gestapelten wiederaufladbaren Batterien (110) eingefügt sind, und Wärmestrahlungsteile (123b, 123'b, 123 "b), die von den Wärmeabsorptionsteilen (123a, 123'a, 123"a) weg abgewinkelt sind und mit dem zumindest einen Wärmedispersionselement (125, 135, 145) in Kontakt stehen, aufweisen.

3. Das Batteriemodul (101, 101', 102, 103) nach Anspruch 2, wobei die Wärmeabsorptionsteile (123'a) der wärmeleitenden Platten (123') Löcher (123'c), die ausgebildet sind, um in einer Höhenrichtung von einem Verbindungsrand der Wärmeabsorptionsteile (123'a), der die Wärmeabsorptionsteile (123'a) mit den Wärmestrahlungsteilen (123'b) verbindet, zu einem gegenüberliegenden Rad der wärmeleitenden Platten (123'), der dem Verbindungsrand gegenüberliegt, lang zu sein, aufweisen oder wobei die wärmeleitenden Platten (123") eine Maschenstruktur aufweisen.

4. Das Batteriemodul (101') nach einem der vorhergehenden Ansprüche, ferner aufweisend eine oder mehrere unterstützende wärmeleitende Platten (128, 128', 128"), die zwischen die wärmeleitenden Platten (123, 123', 123") und die gestapelten wiederaufladbaren Batterien (110) eingefügt sind.

5. Das Batteriemodul (101') nach Anspruch 4, wobei eine erste Anzahl unterstützender wärmeleitender Platten (128, 128', 128"), die zwischen benachbarte wiederaufladbare Batterien (110) in einem mittleren Teil der gestapelten wiederaufladbaren Batterien (110) eingefügt sind, größer ist als eine zweite Anzahl unterstützender wärmeleitender Platten (128, 128', 128"), die zwischen benachbarte wiederaufladbare Batterien (110) in einem Randteil der gestapelten wiederaufladbaren Batterien (110) eingefügt sind.

6. Das Batteriemodul (102, 103) nach Anspruch 1, wobei eine erste summierte Querschnittsfläche von Wärmeleitungen, die in einem mittleren Bereich des Wärmeableitungselements (136, 146, 156, 166, 166') angeordnet sind, größer pro Streckeneinheit ist, als eine zweite summierte Querschnittsfläche der Wärmeleitungen, die in Randbereichen des Wärmeableitungselements (136, 146, 156, 166, 166') angeordnet sind, wobei der Randbereich entfernt vom mittleren Bereich in einer die Wärmeleitungen kreuzenden Richtung angeordnet ist.

7. Das Batteriemodul (102, 103) nach Anspruch 1 oder 6, wobei ein erster Abstand zwischen benachbarten Wärmeleitungen in einem mittleren Bereich des Wärmeableitungselements (136, 146) kleiner ist als ein zweiter Abstand zwischen den benachbarten Wärmeleitungen in einem Randbereich des Wärmeableitungselements (136, 146), wobei der Umfangsbereich entfernt vom mittleren Bereich in einer die Wärmeleitungen kreuzenden Richtung angeordnet ist.

8. Das Batteriemodul (103) nach einem der Ansprüche 6 und 7, wobei die Wärmeleitungen derart angeordnet sind, dass ein Abstand zwischen einem ausgewählten Paar benachbarter Wärmerohre von einem mittleren Bereich des Paars benachbarter Wärmeleitungen zu Randbereichen des Paars benachbarter Wärmeleitungen größer wird.

9. Das Batteriemodul (103) nach einem der Ansprüche 7 oder 8, wobei die Wärmeleitungen einen bogenförmigen Zentralabschnitt, der in einem mittleren Abschnitt der Wärmeleitungen angeordnet ist, aufweisen oder wobei die Wärmeleitungen bogenförmig ausgebildet sind.

10. Das Batteriemodul (102) nach Anspruch 1, wobei ein erster Abstand zwischen benachbarten Wärmeableitungslamellen (136b) in einem mittleren Bereich des Wärmeableitungselements (136) kleiner ist als ein zweiter Abstand zwischen den benachbarten Wärmeableitungslamellen (136b) in einem Randbereich des Wärmeableitungselements (136), wobei der Randbereich entfernt vom mittleren Bereich in einer die Wärmeableitungslamellen (136b) kreuzenden Richtung angeordnet ist.

11. Das Batteriemodul nach einem der vorhergehenden Ansprüche, wobei die Wärmedispersionselemente teilweise in eine Stützplatte des Wärmeableitungselements eingesetzt sind.

## Revendications

1. Module de batterie (101, 101', 102, 103) comprenant :
une pluralité de batteries rechargeables (110) raccordées en série et empilées,
une pluralité de feuilles thermiquement conductrices (123, 123', 123") intercalées entre et étant en contact thermique avec les batteries rechargeables (110) empilées,
des éléments de dispersion de chaleur (125, 135, 145) fournissant une trajectoire de réfrigérant et étant composés de caloducs qui sont en contact thermique avec les feuilles thermiquement conductrices (123, 123', 123"), dans lequel :
le module de batterie (101, 101', 102, 103) comprend en outre un élément de dissipation de chaleur (126, 136, 146) comprenant une plaque de support (126a, 136a, 146a) qui est en contact thermique avec l'élément de dispersion de chaleur (125, 135, 145) et avec des ailettes de dissipation de chaleur (126b, 136b, 146b) faisant saillie de la plaque de support (126a, 136a, 146a), **caractérisé en ce que** :
les caloducs s'étendent dans une direction dans laquelle les batteries rechargeables (110) sont empilées et sont agencées à intervalles dans une direction de largeur des batteries rechargeables (110), et **en ce que** :
les ailettes de dissipation de chaleur (126b, 136b, 146b) s'étendent dans la direction de largeur des batteries rechargeables (110) et sont agencées à intervalles dans la direction dans laquelle les batteries rechargeables (110) sont empilées.

2. Module de batterie (101, 101', 102, 103) selon la revendication 1, dans lequel les feuilles thermiquement conductrices (123, 123', 123") comprennent des parties d'absorption de chaleur (123a, 123'a, 123"a) intercalées entre les batteries rechargeables (110) empilées et les parties de rayonnement de chaleur (123b, 123'b, 123"b) coudées à distance des parties d'absorption de chaleur (123a, 123'a, 123"a) et en contact avec le au moins un élément de dispersion de chaleur (125, 135, 145).

3. Module de batterie (101, 101', 102, 103) selon la revendication 2, dans lequel les parties d'absorption de chaleur (123'a) des feuilles thermiquement conductrices (123') comprennent des trous (123'c) qui sont formés pour être longs dans une direction de hauteur à partir d'un bord de raccordement des parties d'absorption de chaleur (123'a) raccordant les parties d'absorption de chaleur (123'a) aux parties de rayonnement de chaleur (123'b) à un bord opposé des feuilles thermiquement conductrices (123') opposé au bord de raccordement ou dans lequel les feuilles thermiquement conductrices (123") comprennent une structure en maille.

4. Module de batterie (101') selon l'une des revendications précédentes, comprenant en outre une ou plusieurs feuilles thermiquement conductrices (128, 128', 128") secondaires intercalées entre les feuilles thermiquement conductrices (123, 123', 123") et les batteries rechargeables (110) empilées.

5. Module de batterie (101') selon la revendication 4, dans lequel un premier nombre de feuilles thermiquement conductrices (128, 128', 128") secondaires intercalées entre des batteries rechargeables (110) voisines dans une partie centrale des batteries rechargeables (110) empilées est supérieur à un second nombre de feuilles thermiquement conductrices (128, 128', 128") secondaires intercalées entre des batteries rechargeables (110) voisines dans une partie périphérique des batteries rechargeables (110) empilées.

6. Module de batterie (102, 103) selon la revendication 1, dans lequel une première surface transversale totalisée des caloducs disposés dans une région centrale de l'élément de dissipation de chaleur (136, 146, 156, 166, 166') est supérieure par unité de distance à une seconde surface transversale totalisée des caloducs disposés dans des régions périphériques de l'élément de dissipation de chaleur (136, 146, 156, 166, 166'), la région périphérique étant positionnée à distance de la région centrale dans une direction traversant les caloducs.

7. Module de batterie (102, 103) selon la revendication 1 ou 6, dans lequel un premier intervalle entre les caloducs voisins dans une région centrale de l'élément de dissipation de chaleur (136, 146) est inférieur à un second intervalle entre les caloducs voisins dans une région périphérique de l'élément de dissipation de chaleur (136, 146), la région périphérique étant positionnée à distance de la région centrale dans une direction traversant les caloducs.

8. Module de batterie (103) selon l'une des revendications 6 et 7, dans lequel les caloducs sont agencés de sorte qu'un intervalle entre une paire sélectionnée de caloducs voisins augmente à partir d'une région centrale de la paire de caloducs voisins vers les régions périphériques de la paire de caloducs voisins.

9. Module de batterie (103) selon l'une des revendications 7 ou 8, dans lequel les caloducs comprennent une section centrale en forme d'arc agencée dans une section centrale des caloducs ou dans lequel les caloducs sont formés en une forme d'arc.

10. Module de batterie (102) selon la revendication 1, dans lequel un premier intervalle entre des ailettes de dissipation de chaleur (136b) voisines dans une région centrale de l'élément de dissipation de chaleur (136) est inférieur à un second intervalle entre les ailettes de dissipation de chaleur (136b) voisines dans une région périphérique de l'élément de dissipation de chaleur (136), la région périphérique étant positionnée à distance de la région centrale dans une direction traversant les ailettes de dissipation de chaleur (136b).

11. Module de batterie selon l'une des revendications précédentes, dans lequel les éléments de dispersion de chaleur sont partiellement insérés dans une plaque de support de l'élément de dissipation de chaleur.
